# EUROPEAN PATENT APPLICATION

(11) **EP 4 446 859 A1**
(43) Date of publication of application: **16.10.2024**
(21) Application number: 23739952.2
(22) Date of filing: 09.01.2023
(51) Int. Cl.: G06F 3/0481, G06F 9/451, H04N 21/431

(54) **VIDEO DISPLAY AND INTERACTION METHOD AND APPARATUS, ELECTRONIC DEVICE, AND STORAGE MEDIUM**

(30) Priority: 14.01.2022 CN 202210045088
(71) Applicant: BEIJING BYTEDANCE NETWORK TECHNOLOGY CO., LTD., Beijing 100041 (CN)
(72) Inventor: RONG, Sike, Beijing 100086 (CN)
(74) Representative: Dentons UK and Middle East LLP
(86) International application number: PCT/CN2023/071191
(87) International publication number: WO 2023/134610

(57) **Abstract**

A video display and interaction method and apparatus, an electronic device, and a storage medium. The method comprises: during video display, in response to obtaining a first operation instruction for a video, triggering a video downloading process, and starting downloading a target video associated with the first operation instruction; and in the process of downloading the target video, in response to a second operation instruction of user on a video display interface, completing a corresponding interaction operation.

## Description

The present disclosure claims the priority of China Patent Application No.202210045088.3 filed in the China Patent Office on Jan. 14, 2022, the entire contents of which are incorporated by reference in this disclosure.

### TECHNICAL FIELD

Embodiments of the present disclosure relate to the technical field of smart terminals, for example, to a video display and interaction method and apparatus, an electronic device, and a storage medium.

### BACKGROUND

In short video applications or applications that can share and post videos such as social media, when a video is to be shared across platforms, the video download will be triggered first, and then the video may be shared in a form of a video file. However, while downloading the video, a user needs to wait in a download interface until the download is completed. It may be because the user's network speed is low, the equipment fails or a large video size, which leads to a long waiting time for downloading and affects the user experience.

### SUMMARY

The embodiments of the present disclosure provide a video display and interaction method and apparatus, an electronic device, and a storage medium, which can respond to the user's interactive instruction on a video display interface while downloading a video, and implement a corresponding interactive operation, enabling the user to perform a video interactive operation while waiting for the video download, and the user experience can be enhanced.

In a first aspect, an embodiment of the present disclosure provides a video presentation and interaction method, comprising:
triggering a video download process and starting to download a target video associated with a first operation instruction, while displaying a video, in response to obtaining the first operation instruction for the video; and
implementing a corresponding interactive operation in response to a second operation instruction of a user on a video display interface while downloading the target video.

In a second aspect, an embodiment of the present disclosure provides a video presentation and interaction method, comprising:
a video download module configured to, trigger a video download process and start to download a target video associated with a first operation instruction, while displaying a video, in response to obtaining the first operation instruction for the video; and
an interactive operation response module configured to, implement a corresponding interactive operation in response to a second operation instruction of a user on a video display interface while downloading the target video.

In a third aspect, an embodiment of the present disclosure provides an electronic device, comprising:
a processor; and
a storage apparatus configured to a program,
wherein the program, when executed by the processor, cause the processor to implement the video display and interaction method according to any embodiment of the present disclosure.

In a forth aspect, an embodiment of the present disclosure provides an storage medium comprising computer executable instructions, wherein the computer executable instructions, when executed by a computer processor, are configured to perform the video display and interaction method according to any embodiment of the present disclosure.

### BRIEF DESCRIPTION OF THE DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic, and the original and elements are not necessarily drawn to scale.
FIG. 1 is a flowchart of a video display and interaction method provided in Embodiment 1 of the present disclosure;
FIG. 2 is a schematic diagram of video sharing provided in Embodiment 1 of the present disclosure;
FIG. 3 is a schematic diagram of display a video download progress provided in Embodiment 1 of the present disclosure;
FIG. 4 is a flowchart of a video display and interaction method provided in Embodiment 2 of the present disclosure;
FIG. 5 is a schematic diagram of jumping to a target sharing platform interface after downloading a video provided in Embodiment 2 of the present disclosure;
FIG. 6 is a flowchart of a video display and interaction method provided in Embodiment 3 of the present disclosure;
FIG. 7 is a schematic diagram of jumping after downloading a video provided in Embodiment 3 of the present disclosure;
FIG. 8 is a schematic diagram of jumping after downloading a video provided in Embodiment 3 of the present disclosure;
FIG. 9 is a structural schematic diagram of a video display and interaction apparatus provided in Embodiment 4 of the present disclosure; and
FIG. 10 is a structural schematic diagram of an electronic device provided in Embodiment 5 of the present disclosure.

### DETAILED DESCRIPTION

Embodiments of the present disclosure will be described below with reference to the accompanying drawings. Although some embodiments of the present disclosure are shown in the drawings, it should be understood that the present disclosure can be embodied in various forms, and these embodiments are provided for a more thorough and complete understanding of the present disclosure. It should be understood that the drawings and embodiments of the present disclosure are for exemplary purposes only.

It should be understood that multiple steps described in the method embodiments of the present disclosure may be performed in a different order and/or in parallel. Furthermore, method embodiments may include additional steps and/or omit performing the illustrated steps.

As used herein, the term "including" and its variants are open-ended including, that is, "including but not limited to". The term "based on" is "at least partially based on". The term "one embodiment" means "at least one embodiment"; The term "another embodiment" means "at least one other embodiment"; The term "some embodiments" means "at least some embodiments". Related definitions of other terms will be given in the following description.

It should be noted that the concepts of "first" and "second" mentioned in this disclosure are only used to distinguish different devices, modules or units.

It should be noted that the modifications of "a", "an" and "multiple" mentioned in this disclosure are schematic, and those skilled in the art should understand that unless the context clearly indicates otherwise, they should be understood as "one or more".

### Embodiment 1

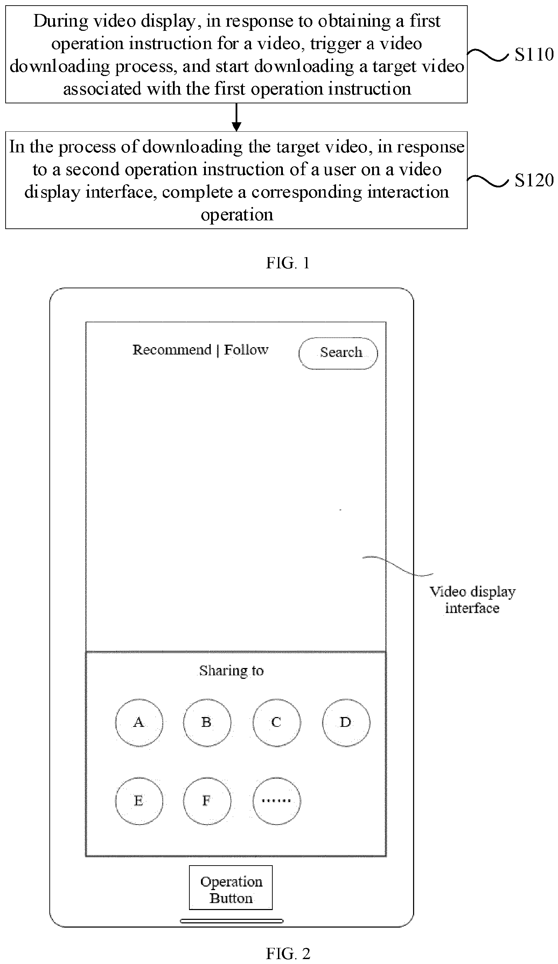

FIG. 1 is a flowchart of a video display and interaction method provided in embodiment 1 of the present disclosure. The embodiment of the present disclosure is applicable to video stream data consumption and sharing scenarios, especially to a short video playing platform. The method may be performed by a video display and interaction apparatus. The apparatus may be implemented by software and/or hardware and may be configured in an electronic device, e.g., configured in a mobile terminal or a server device.

As shown in FIG. 1, the video display and interaction method provided in the present embodiment includes the following steps.

At S110, triggering a video download process and starting to download a target video associated with a first operation instruction, while displaying a video, in response to obtaining the first operation instruction for the video.

Short video applications and other social media application clients capable of posting and viewing videos typically provide an interface for a user to interact with video content to realize operations on the video content, such as giving a like, commenting, favoriting, downloading (or buffering), forwarding, and sharing.

In the present embodiment, the first operation instruction is an off-site sharing instruction, an off-site forwarding instruction, or a downloading instruction. In response to any first instruction obtained by the client, the subsequent video download process may be triggered. The downloading instruction is directly triggering the download process. The off-site sharing instruction or the off-site forwarding instruction will trigger the download process after a target platform for sharing or forwarding is determined by the user.

In one embodiment, the current video display interface is displaying video data 1, and when the user triggers a video download function control, the client may obtain a video download instruction and then download the video data 1 that the current video display interface is displaying. The video data 1 is the target video associated with the video download instruction. Moreover, when the user wishes to share or forward the video data 1 across platforms and triggers a sharing or forwarding function control, the application client displays off-site platforms which can be shared or forwarded in response to a sharing or forwarding instruction. After the user selects a target sharing platform, the client may obtain a video download instruction and then start to download the video data 1 according to the video download instruction. Exemplarily, a video sharing process may be as shown in FIG. 2. After the user triggers the sharing function control of the video display interface, a menu will prop up from the video display interface to display a plurality of platforms (A, B, C, D, E, F ......) for video sharing, and the user may select one option from a plurality of available options as the target sharing platform. It is assumed that the user selects A as the target sharing platform, the client may obtain the video download instruction while receiving the selection result and then start to download the target video associated with the video download instruction.

At S120, implementing a corresponding interactive operation in response to a second operation instruction of a user on a video display interface while downloading the target video.

In the present embodiment, the second operation instruction is an instruction obtained by the client while downloading a video, which may be an instruction generated by the user interacting with a function control on the video display interface, which is an instruction different from the first operation instruction and which is an instruction that will not trigger the video download process.

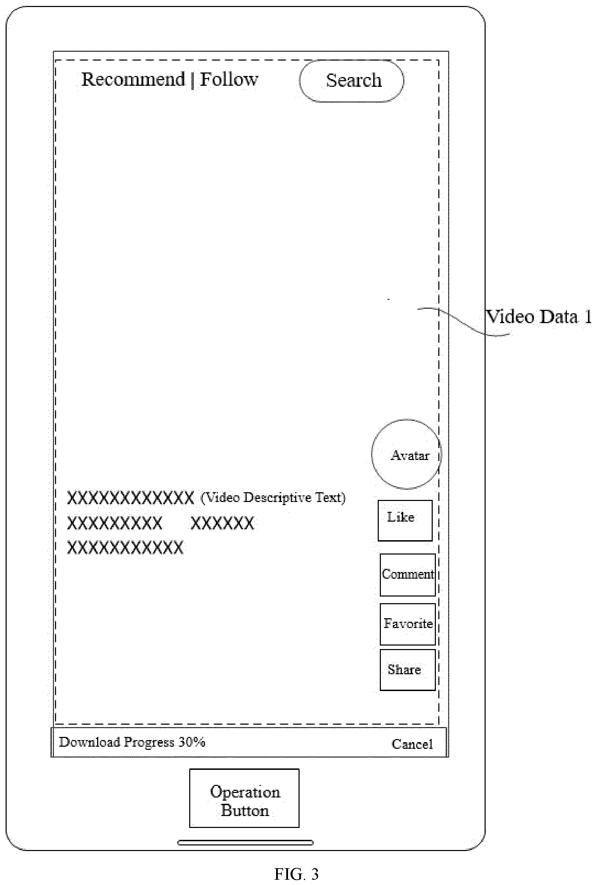

In one embodiment, while downloading the target video, the selection menu for the target sharing platform will be put away and the video display interface returns to the state before downloading the target video. For details, a reference may be made to the schematic diagram of the video display interface shown in FIG. 3. In the video display interface, the downloaded target video, i.e., the video data 1, is still displayed. Not only can video playing be enabled in the video display interface, but also video data switching can be completed by up and down (or left and right) sliding operations to conduct consumption on new video data. The user may also give an operation instruction by tapping on interactive function controls such as Like, Comment, Favorite, and Avatar, or information such as a video description text on the video display interface, to interact with the video information. Moreover, the user may also enter a keyword in a search box to search for a video and switch between a video recommended by the client and a video of a subject that the user follows. Video descriptive text includes information such as a video introduction and a topic tag(s) related to video content.

Thus, the user may pass time by interacting with the video display interface while waiting for target video to download, rather than just wait without performing other operations. It needs to be noted here that if the user switches to new video data while downloading the target video, and downloads the video or share the video across platforms in the new video data display interface, the client will not respond to the corresponding video download instruction or sharing instruction. That is, to guarantee the downloading of the target video, a second video will not be started to download at the same time.

In an alternative implementation, while downloading the target video, a download progress may also be display on the video display interface. Usually, a position for displaying the download progress may be an edge position for display the video download progress where there is no functional operation control displayed. For example, the position may be a lower edge of the video display interface in FIG. 3. As a matter of course, a left edge position of the video display interface may also be possible.

In the embodiments of the present disclosure, a video download process may be triggered and a target video associated with a first operation instruction may be started to download, while displaying a video, in response to obtaining the first operation instruction for the video; and a corresponding interactive operation may be implemented in response to a second operation instruction of a user on a video display interface while downloading the target video. The embodiment of the present disclosure solves a problem that in the related art, while sharing video across platforms, a video can be shared only after downloading thereof is finished, and interaction with the video display interface cannot be achieved. The corresponding interactive operation can be implemented in response to an interactive instruction of the user on the video display interface is achieved, while downloading the video, so that the user can perform a video interactive operation while waiting for video to download, and the user experience is enhanced.

### Embodiment 2

The present embodiment of the present disclosure may be combined with multiple optional solutions in the video display and interaction method provided in the above embodiment. The video display and interaction method provided in the present embodiment describes a process of triggering a video download instruction and performing video display and interaction while downloading a video, when sharing the video across platforms in the event that the first operation instruction is an off-site sharing instruction.

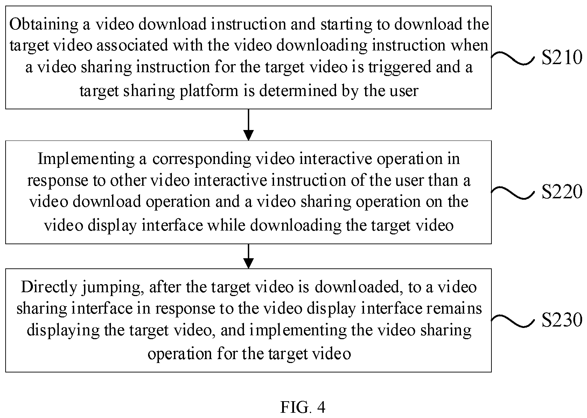

FIG. 4 is a flowchart of a video display and interaction method provided in Embodiment 2 of the present disclosure. As shown in FIG. 4, the video display and interaction method provided in the present embodiment includes the following steps.

At S210, obtaining a video download instruction and starting to download the target video associated with the video downloading instruction when a video sharing instruction for the target video is triggered and a target sharing platform is determined by the user.

An apparatus for performing the video display and interaction method provided in the present embodiment may be integrated into an application software client for video playing, posting, and sharing, and may be installed in an electronic device such as a server, a mobile phone, or a computer along with the application software. The application software may be social media application software such as short video application software.

In the present embodiment, the target video is a video that is being currently played in a video display interface of the client and being wanted to share across platforms. When the user triggers a sharing function control on the video display interface of the target video, the client responds to a sharing instruction and may display platforms for video sharing in the form of a popup menu, a list, or the like, for the user to select a target sharing platform. After the user selects the target sharing platform, the client may obtain a video download instruction and then start to download the target video.

At S220, implementing a corresponding video interactive operation in response to a video interactive instruction of the user other than a video download operation and a video sharing operation on the video display interface while downloading the target video.

In one embodiment, the video interactive instruction includes operation instructions such as video data switching, giving a like, commenting, and favoriting, and may also be a video interactive instruction generated by tapping on a user avatar, video description text, and the like. For example, the video interactive instruction may be an instruction generated by triggering any operable control in FIG. 3, or an interactive instruction triggered by any gesture on the video display interface. No response is made to a video download operation instruction and a video sharing operation instruction triggered by the user.

Therefore, in case of a long waiting time for downloading, the user can conduct normal consumption on video data and interact with the corresponding client without feeling bored. The negative emotion of using the client induced while waiting can be reduced, thereby enhancing the user experience.

At S230, directly jumping, after the target video is downloaded, to a video sharing interface in response to the video display interface remains displaying the target video, and implementing the video sharing operation for the target video.

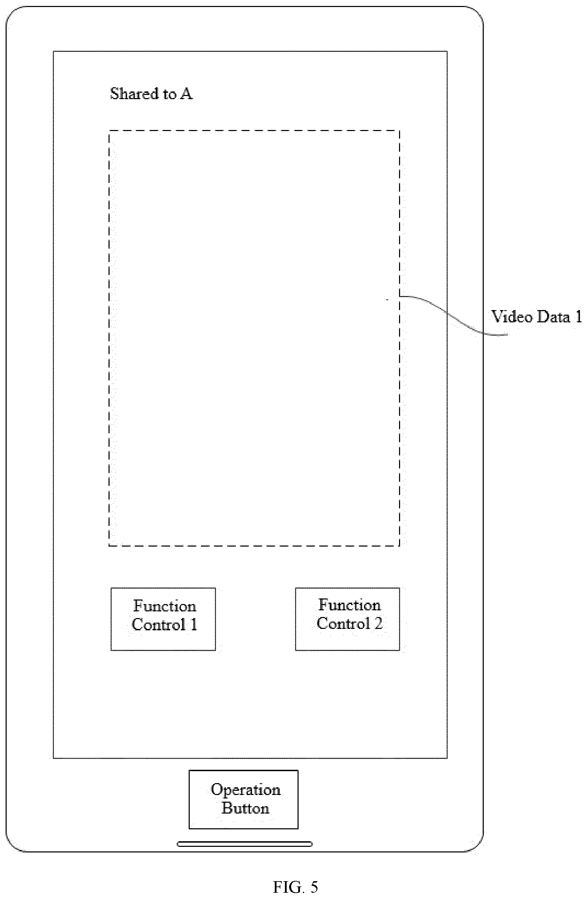

In the present embodiment, the video display interface remains displaying the target video may be construed as not switching video data when the target video is downloaded. For example, the downloaded target video is video data 1, and when the download is completed, the video display interface still displays the video data 1. One possibility is that while downloading the video data 1, the user did not switch to new video data, but triggered, on the video display interface of the video data 1, a video interactive instruction that may not switch video data, such as giving a like, commenting, or favoriting. Another possibility is that the user switched to new video data but switched from the new video data back to the video data 1. This indicates to a certain extent that the willingness of the user to continuously browse other video contents is not strong. Thus, when the target video is downloaded, it can directly jump to the video sharing interface of the target sharing platform and complete the video sharing operation for the target video. In one embodiment, the video sharing interface can refer to the content shown in FIG. 5. In FIG. 5, the user is informed that the video data 1 has been shared to platform A. What is shown in the dotted box may be a cover image of the video data 1 or any image in the video data 1. Function control 1 and function control 2 may be provided with corresponding functions according to the requirements of the application, such as a function control for continuing to share a video, staying at the platform A, returning to the client where video sharing is triggered, or posting a video. It will be understood that the number of function controls in the video sharing interface may be personally set according to the requirements of the application scenario for use by the user.

In the embodiments of the present disclosure, when the video sharing instruction of the target video is triggered and the target sharing platform is determined by the user, the video download instruction is obtained, and then the target video associated with the video download instruction is started to be downloaded; and while downloading the target video, the corresponding interactive operation is implemented in response to operation instruction on the video display interface by the user. The embodiment of the present disclosure solves a problem that in the related art, while sharing video across platforms, a video can be shared only after downloading thereof is finished, and interaction with the video display interface cannot be achieved. The corresponding interactive operation can be implemented in response to an interactive instruction of the user on the video display interface is achieved, while downloading the video, so that the user can perform a video interactive operation while waiting for video to download, and the user experience is enhanced.

### Embodiment 3

The present embodiment of the present disclosure may be combined with multiple optional solutions in the video display and interaction method provided in the above embodiment. The video display and interaction method provided in the present embodiment describes a process of triggering a video download instruction and performing new video display (consumption) and interaction while downloading a video, when sharing the video across platforms in the event that the first operation instruction is an off-site sharing instruction.

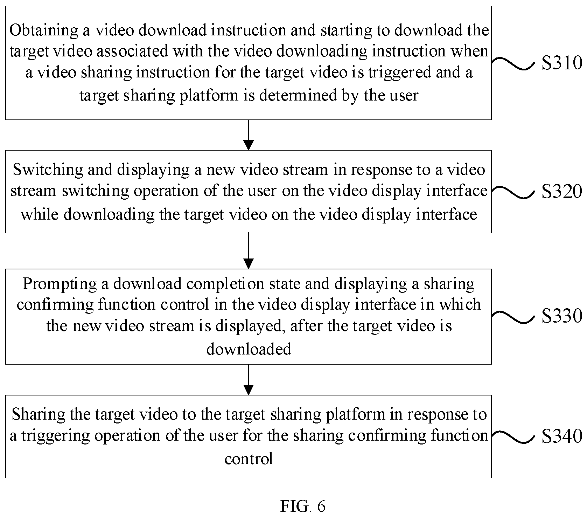

FIG. 6 is a flowchart of a video display and interaction method provided in Embodiment 3 of the present disclosure. As shown in FIG. 6, the video display and interaction method provided in the present embodiment includes the following steps.

At S310, obtaining a video download instruction and starting to download the target video associated with the video downloading instruction when a video sharing instruction for the target video is triggered and a target sharing platform is determined by the user.

In the present embodiment, the target video is a video that is being currently played in a video display interface of the client and being wanted to share across platforms. When the user triggers a sharing function control on the video display interface of the target video, the client responds to a sharing instruction and may display platforms for video sharing in the form of a popup menu, a list, or the like, for the user to select a target sharing platform. After the user selects the target sharing platform, the client may obtain a video download instruction and then start to download the target video.

At S320, switching and displaying a new video stream in response to a video stream switching operation of the user on the video display interface while downloading the target video on the video display interface.

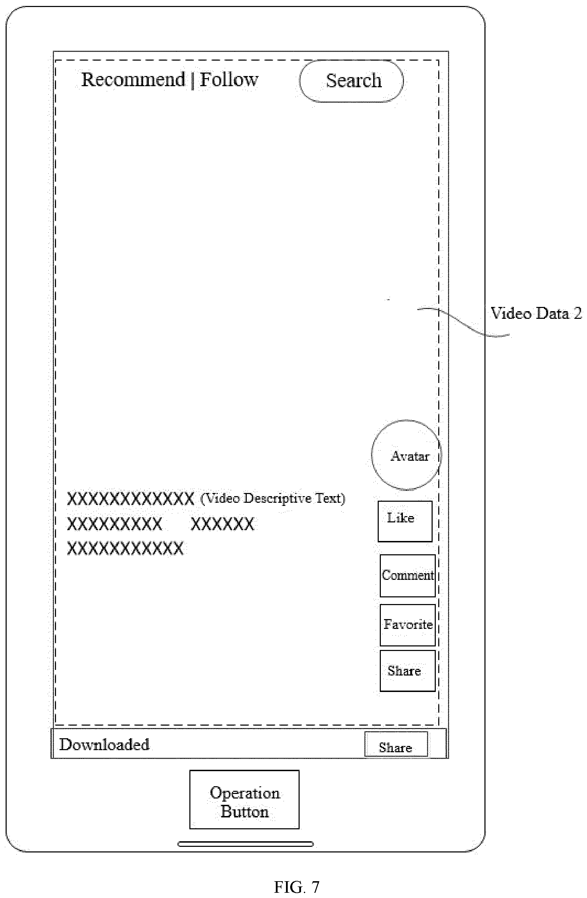

While downloading the target video, the user conducts interaction with the video display interface and gives a video stream switching instruction such that the video display interface is switched to display new video data. For example, when the target video is video data 1, the video display interface shown in FIG. 3 is switched to new video data (video stream) by a sliding gesture, and the video display interface display video data 2 in FIG. 7 is obtained.

As a matter of course, before and after switching to the new video data, the user may also perform other interactive operations on the video display interface, e.g., interactive operations such as giving a like, commenting, and favoriting.

At S330, prompting a download completion state and displaying a sharing confirming function control in the video display interface in which the new video stream is displayed, after the target video is downloaded.

Since the user has switched to the new video data, it is not determined whether the user wants to continuously browse the new video data, or continues to share video data across platforms, and makes interface jump across platforms. Then, after the target video is downloaded, prompt information of the download completion state is displayed (as shown in FIG, 7), and the sharing confirming function control is displayed. Thus, the user can complete a final video sharing conforming operation by means of the sharing confirming function control after viewing the prompt information of downloading completion.

At S340, sharing the target video to the target sharing platform in response to a triggering operation of the user for the sharing confirming function control.

After the user triggers the sharing confirming function control, a target video sharing willingness of the user may be determined, the sharing operation instruction for the target video is accomplished, and the target video is shared to the target sharing platform.

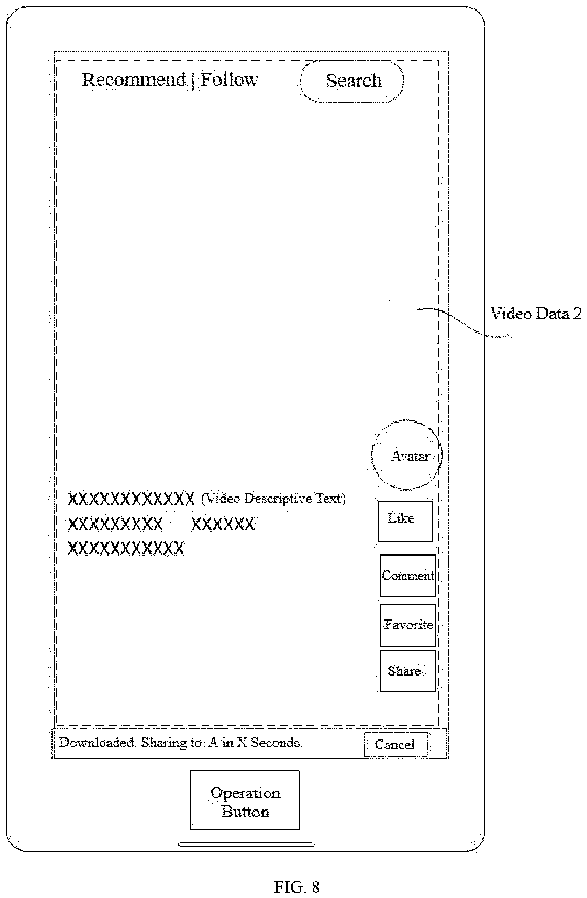

In another optional implementation, after the target video is downloaded, a video sharing countdown may also be displayed in the video display interface in which the new video stream is displayed, and the target video is shared to the target sharing platform after the video sharing countdown ends. As shown in FIG. 8, the prompt information is displayed below the video display interface: Downloaded. Sharing to target sharing platform A in X seconds. X refers to a time number of the countdown.

In addition, a video sharing canceling function control may be displayed while the video sharing countdown is displayed. When the user does not need to continue to share video data, the video sharing canceling function control may be triggered. Then, a video sharing operation for the target video is canceled in response to a triggering operation of the user for the video sharing canceling function control. So that the user can control the video sharing process more conveniently and flexibly.

In the embodiments of the present disclosure, while displaying the video, after obtaining the first operation instruction of the video, that is, when the user triggers the video sharing instruction of the target video and determines the target sharing platform, the video downloading process is triggered, and starting to download the target video associated with the first operation instruction; and while downloading the target video, the corresponding interactive operation is realized in response to operation instructions of the user on the video display interface. When the user switches new video data while downloading the video, the user is provided with a download completion status prompt and an option of whether to continue sharing the video. The embodiment of the present disclosure solves a problem that in the related art, while sharing video across platforms, a video can be shared only after downloading thereof is finished, and interaction with the video display interface cannot be achieved. The corresponding interactive operation can be implemented in response to an interactive instruction of the user on the video display interface is achieved, while downloading the video, so that the user can perform a video interactive operation while waiting for video to download, and the user experience is enhanced.

### Embodiment 4

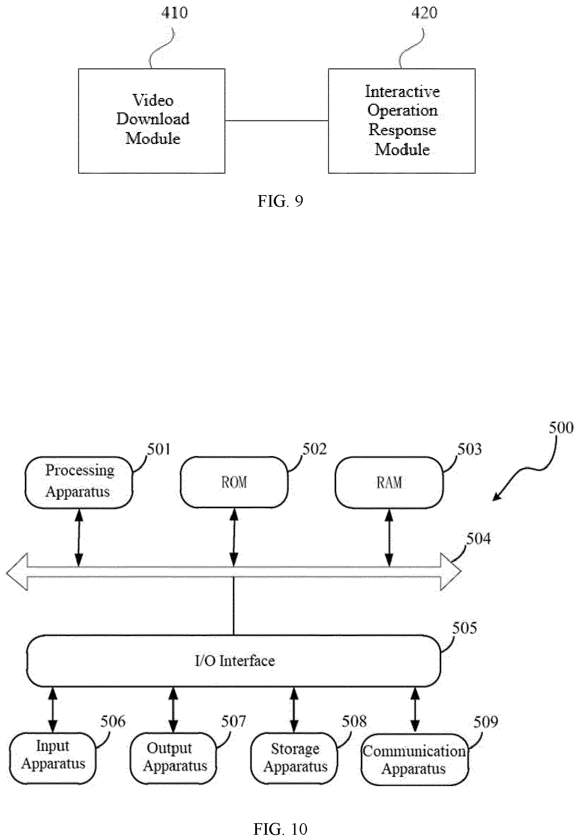

FIG. 9 is a structural schematic diagram of a video display and interaction apparatus provided in Embodiment 4 of the present disclosure. The video stream data consumption and sharing scenarios provided in the present embodiment are especially applicable to a short video playing platform. The apparatus may be implemented by software and/or hardware and may be configured in an electronic device, e.g., configured in a mobile terminal or a server device.

As shown in FIG. 9, the video display and interaction apparatus includes a video download module 410 and an interactive operation response module 420.

The video download module 410 is configured to trigger a video download process and start to download a target video associated with a first operation instruction, while displaying a video, in response to obtaining the first operation instruction for the video; and the interactive operation response module 420 is configured to, while downloading the target video implement a corresponding interactive operation in response to a second operation instruction of a user on a video display interface while downloading the target video.

In the embodiments of the present disclosure, a video download process may be triggered and a target video associated with a first operation instruction may be started to download, while displaying a video, in response to obtaining the first operation instruction for the video; and a corresponding interactive operation may be implemented in response to a second operation instruction of a user on a video display interface while downloading the target video. The embodiment of the present disclosure solves a problem that in the related art, while sharing video across platforms, a video can be shared only after downloading thereof is finished, and interaction with the video display interface cannot be achieved. The corresponding interactive operation can be implemented in response to an interactive instruction of the user on the video display interface is achieved, while downloading the video, so that the user can perform a video interactive operation while waiting for video to download, and the user experience is enhanced.

In some optional implementations, the first operation instruction is an off-site sharing instruction, an off-site forwarding instruction, or a downloading instruction.

In some optional implementations, the interactive operation response module 420 is configured to implement a corresponding video interactive operation in response to a video interactive instruction of the user other than a video download operation, an off-site video sharing operation, and off-site video forwarding on the video display interface.

In some optional implementations, the interactive operation response module 420 is configured to switch and display a new video stream in response to a video stream switching operation of the user on the video display interface while downloading the target video.

In some optional implementations, when the first operation instruction is the off-site sharing instruction, the video download module 410 is configured to obtain a video download instruction and trigger the video download process when a video sharing instruction for the target video is triggered and a target sharing platform is determined by the user.

Correspondingly, the interactive operation response module 420 is configured to: prompt a download completion state and display a sharing confirming function control in the video display interface in which the new video stream is displayed, after the target video is downloaded; and
share the target video to the target sharing platform in response to a triggering operation of the user for the sharing confirming function control.

In some optional implementations, when the first operation instruction is the off-site sharing instruction, the video download module 410 is configured to obtain a video download instruction and trigger the video download process when a video sharing instruction for the target video is triggered and a target sharing platform is determined by the user.

Correspondingly, the interactive operation response module 420 is configured to display a video sharing countdown in the video display interface in which the new video stream is displayed after the target video is downloaded, and share the target video to the target sharing platform after the video sharing countdown ends.

In some optional implementations, the interactive operation response module 420 is configured to:
display a video sharing canceling function control while displaying the video sharing countdown; and
cancel a video sharing operation for the target video in response to a triggering operation of the user for the video sharing canceling function control.

In some optional implementations, the video download module 410 is configured to obtain the video download instruction when a video sharing instruction for the target video is triggered and a target sharing platform is determined by the user.

Correspondingly, the interactive operation response module 420 is configured to directly jump, after the target video is downloaded, to a video sharing interface in response to the video display interface remains displaying the target video, and implement the video sharing operation for the target video.

In some optional implementations, the video display and interaction apparatus further include a download progress prompt module configured to display a video download progress in the video display interface at an edge position where there is no functional operation control displayed.

The video display and interaction apparatus provided in the embodiment of the present disclosure can perform the video display and interaction method provided in any embodiment of the present disclosure, and has corresponding functional modules for performing the method and beneficial effects.

It needs to be noted that the units and modules included in the apparatus described above are only divided according to functional logic, , as long as corresponding functions can be implemented. In addition, names of the functional units are merely for the purpose of distinguishing from each other.

### Embodiment 5

Referring to FIG. 10, FIG. 10 illustrates a schematic structural diagram of an electronic device 500 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 10 is merely an example.

As illustrated in FIG. 10, the electronic device 500 may include a processing apparatus 501 (e.g., a central processing unit, a graphics processing unit, etc.), the electronic device 500 can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected by means of a bus 504. An input/output (I/O) interface 505 is also connected to the bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While FIG. 10 illustrates the electronic device 500 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, the computer program product includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 508, or may be installed from the ROM 502. When the computer program is executed by the processing apparatus 501, the above-mentioned functions in the methods of some embodiments of the present disclosure are performed.

The electronic device provided in the present embodiment of the present disclosure and the video display and interaction method provided in the foregoing embodiments belong to the same disclosure concept. For technical details not described in detail in the present embodiment, a reference may be made to the foregoing embodiments, and the present embodiment and the foregoing embodiments have the same beneficial effects.

### Embodiment 6

The present embodiment of the present disclosure provides a computer storage medium on which a computer program is stored. The program, when executed by a processor, implements the video display and interaction method provided in the foregoing embodiments.

It should be noted that the above-mentioned computer-readable medium in the present disclosure may be a computer-readable signal medium or a computer-readable storage medium or any combination thereof. For example, the computer-readable storage medium may be an electric, magnetic, optical, electromagnetic, infrared, or semiconductor system, apparatus or device, or any combination thereof. The computer-readable storage medium may include: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium may carry one or more programs which, when executed by the electronic device, cause the electronic device to:
trigger a video download process and start to download a target video associated with a first operation instruction, while displaying a video, in response to obtaining the first operation instruction for the video; and
implement a corresponding interactive operation in response to a second operation instruction of a user on a video display interface while downloading the target video.

The computer program codes for performing the operations of the present disclosure may be written in one or more programming languages or a combination thereof. The above-mentioned programming languages include object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. For example, the data generation module can also be described as a "video data generation module".

The functions described herein above may be performed, at least partially, by one or more hardware logic components. For example, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes an electrical, magnetic, optical, electromagnetic, infrared, or semi-conductive system, apparatus or device, or any suitable combination of the foregoing. The machine-readable storage medium includes electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, [Example 1] provides a video display and interaction method, including:
triggering a video download process and starting to download a target video associated with a first operation instruction, while displaying a video, in response to obtaining the first operation instruction for the video; and
implementing a corresponding interactive operation in response to a second operation instruction of a user on a video display interface while downloading the target video.

According to one or more embodiments of the present disclosure, [Example 2] provides a video display and interaction method, further including:
in some optional implementations, the first operation instruction is an off-site sharing instruction, an off-site forwarding instruction, or a downloading instruction.

According to one or more embodiments of the present disclosure, [Example 3] provides a video display and interaction method, further including:
in some optional implementations, the implementing a corresponding interactive operation in response to a second operation instruction of a user on a video display interface comprises:
implementing a corresponding video interactive operation in response to a video interactive instruction of the user other than a video download operation, an off-site video sharing operation, and off-site video forwarding on the video display interface.

According to one or more embodiments of the present disclosure, [Example 4] provides a video display and interaction method, further including:
in some optional implementations, the implementing a corresponding video interactive operation in response to a video interactive instruction of the user other than a video download operation, an off-site video sharing operation, and off-site video forwarding on the video display interface comprises:
switching and displaying a new video stream in response to a video stream switching operation of the user on the video display interface.

According to one or more embodiments of the present disclosure, [Example 5] provides a video display and interaction method, further including:
in some optional implementations, when the first operation instruction is an off-site sharing instruction, the triggering a video download process comprises:
obtaining a video download instruction and triggering the video download process when a video sharing instruction for the target video is triggered and a target sharing platform is determined by the user.

According to one or more embodiments of the present disclosure, [Example 6] provides a video display and interaction method, further including:
in some optional implementations, the method further includes:
prompting a download completion state and displaying a sharing confirming function control in the video display interface in which the new video stream is displayed, after the target video is downloaded; and
sharing the target video to the target sharing platform in response to a triggering operation of the user for the sharing confirming function control.

According to one or more embodiments of the present disclosure, [Example 7] provides a video display and interaction method, further including:
in some optional implementations, displaying a video sharing countdown in the video display interface in which the new video stream is displayed after the target video is downloaded, and sharing the target video to the target sharing platform after the video sharing countdown ends

According to one or more embodiments of the present disclosure, [Example 8] provides a video display and interaction method, further including:
displaying a video sharing canceling function control while displaying the video sharing countdown; and
canceling a video sharing operation for the target video in response to a triggering operation of the user for the video sharing canceling function control.

According to one or more embodiments of the present disclosure, [Example 9] provides a video display and interaction method, further including:
in some optional implementations, the method further includes:
directly jumping, after the target video is downloaded, to a video sharing interface in response to the video display interface remains displaying the target video, and implementing the video sharing operation for the target video.

According to one or more embodiments of the present disclosure, [Example 10] provides a video display and interaction method, further including:
after starting to download the target video associated with the first operation instruction, further including:
displaying a video download progress in the video display interface at an edge position where there is no functional operation control displayed.

According to one or more embodiments of the present disclosure, [Example 11] provides a video display and interaction apparatus, including:
a video download module configured to, trigger a video download process and start to download a target video associated with a first operation instruction, while displaying a video, in response to obtaining the first operation instruction for the video; and
an interactive operation response module configured to, implement a corresponding interactive operation in response to a second operation instruction of a user on a video display interface while downloading the target video.

According to one or more embodiments of the present disclosure, [Example 12] provides a video display and interaction apparatus, further including:
in some optional implementations, the first operation instruction is an off-site sharing instruction, an off-site forwarding instruction, or a downloading instruction.

According to one or more embodiments of the present disclosure, [Example 13] provides a video display and interaction apparatus, further including:
in some optional implementations, the interactive operation response module is configured to implement a corresponding video interactive operation in response to a video interactive instruction of the user other than a video download operation, an off-site video sharing operation, and off-site video forwarding on the video display interface.

According to one or more embodiments of the present disclosure, [Example 14] provides a video display and interaction apparatus, further including:
in some optional implementations, the interactive operation response module is configured to switch and display a new video stream in response to a video stream switching operation of the user on the video display interface while downloading the target video.

According to one or more embodiments of the present disclosure, [Example 15] provides a video display and interaction apparatus, further including:
in some optional implementations, when the first operation instruction is the off-site sharing instruction, the video download module is configured to obtain a video download instruction and trigger the video download process when a video sharing instruction for the target video is triggered and a target sharing platform is determined by the user.

According to one or more embodiments of the present disclosure, [Example 16] provides a video display and interaction apparatus, further including:
in some optional implementations, the interactive operation response module is configured to: prompt a download completion state and display a sharing confirming function control in the video display interface in which the new video stream is displayed, after the target video is downloaded; and
share the target video to the target sharing platform in response to a triggering operation of the user for the sharing confirming function control.

According to one or more embodiments of the present disclosure, [Example 17] provides a video display and interaction apparatus, further including:
in some optional implementations, the interactive operation response module is configured to display a video sharing countdown in the video display interface in which the new video stream is displayed after the target video is downloaded, and share the target video to the target sharing platform after the video sharing countdown ends.

According to one or more embodiments of the present disclosure, [Example 18] provides a video display and interaction apparatus, further including:
in some optional implementations, the interactive operation response module may be further configured to:
display a video sharing canceling function control while displaying the video sharing countdown; and
cancel a video sharing operation for the target video in response to a triggering operation of the user for the video sharing canceling function control.

According to one or more embodiments of the present disclosure, [Example 19] provides a video display and interaction apparatus, further including:
in some optional implementations, the video download module is configured to, when the user triggers a video sharing instruction for the target video and determines a target sharing platform, obtain the video download instruction; and
correspondingly, the interactive operation response module is further configured to, after the target video is downloaded, if the video display interface remains displaying the target video, directly jump to a video sharing interface and complete the video sharing operation for the target video.

According to one or more embodiments of the present disclosure, [Example 20] provides a video display and interaction apparatus, further including:
in some optional implementations, the apparatus for video display and interaction further includes a download progress prompt module configured to display a video download progress in the video display interface at an edge position where there is no functional operation control displayed.

## Claims

1. A video display and interaction method, comprising:
triggering a video download process and starting to download a target video associated with a first operation instruction, while displaying a video, in response to obtaining the first operation instruction for the video; and
implementing a corresponding interactive operation in response to a second operation instruction of a user on a video display interface while downloading the target video.

2. The method according to claim 1, wherein the first operation instruction is an off-site sharing instruction, an off-site forwarding instruction, or a downloading instruction.

3. The method according to claim 1, wherein the implementing a corresponding interactive operation in response to a second operation instruction of a user on a video display interface comprises:
implementing a corresponding video interactive operation in response to a video interactive instruction of the user other than a video download operation, an off-site video sharing operation, and off-site video forwarding on the video display interface.

4. The method according to claim 3, wherein the implementing a corresponding video interactive operation in response to a video interactive instruction of the user other than a video download operation, an off-site video sharing operation, and off-site video forwarding on the video display interface comprises:
switching and displaying a new video stream in response to a video stream switching operation of the user on the video display interface.

5. The method according to claim 4, wherein when the first operation instruction is an off-site sharing instruction, the triggering a video download process comprises:
obtaining a video download instruction and triggering the video download process when a video sharing instruction for the target video is triggered and a target sharing platform is determined by the user.

6. The method according to claim 5, further comprising:
prompting a download completion state and displaying a sharing confirming function control in the video display interface in which the new video stream is displayed, after the target video is downloaded; and
sharing the target video to the target sharing platform in response to a triggering operation of the user for the sharing confirming function control.

7. The method according to claim 5, further comprising:
displaying a video sharing countdown in the video display interface in which the new video stream is displayed after the target video is downloaded, and sharing the target video to the target sharing platform after the video sharing countdown ends.

8. The method according to claim 7, further comprising:
displaying a video sharing canceling function control while displaying the video sharing countdown; and
canceling a video sharing operation for the target video in response to a triggering operation of the user for the video sharing canceling function control.

9. The method according to claim 5, further comprising:
directly jumping, after the target video is downloaded, to a video sharing interface in response to the video display interface remains displaying the target video, and implementing the video sharing operation for the target video.

10. The method according to any one of claims 1 to 9, after starting to download the target video associated with the first operation instruction, further comprising:
displaying a video download progress in the video display interface at an edge position where there is no functional operation control displayed.

11. A video display and interaction apparatus, comprising:
a video download module configured to, trigger a video download process and start to download a target video associated with a first operation instruction, while displaying a video, in response to obtaining the first operation instruction for the video; and
an interactive operation response module configured to, implement a corresponding interactive operation in response to a second operation instruction of a user on a video display interface while downloading the target video.

12. An electronic device, comprising:
a processor; and
a storage apparatus configured to store a program,
wherein the program, when executed by the processor, cause the processor to implement the video display and interaction method according to any one of claims 1 to 10.

13. A storage medium comprising computer executable instructions, wherein the computer executable instructions, when executed by a computer processor, are configured to perform the video display and interaction method according to any one of claims 1 to 10.
